# EUROPÄISCHE PATENTANMELDUNG

(11) **EP 3 053 720 A1**
(43) Veröffentlichungstag der Anmeldung: **10.08.2016**
(21) Anmeldenummer: 16151101.9
(22) Anmeldetag: 13.01.2016
(51) Int. Cl.: B28B 1/00, B22F 3/105, B29C 67/00, B23K 15/00, B23K 26/34

(54) **VERFAHREN ZUM HERSTELLEN EINES DREIDIMENSIONALEN OBJEKTS DURCH AUFEINANDER FOLGENDES VERFESTIGEN VON SCHICHTEN**

(30) Priorität: 09.02.2015 DE 102015001480
(71) Anmelder: Werkzeugbau Siegfried Hofmann GmbH, 96215 Lichtenfels (DE)
(72) Erfinder: WEBER, Udo, 98673 Eisfeld (DE)
(74) Vertreter: Hafner & Kohl

(57) **Zusammenfassung**

Die Erfindung betrifft ein Verfahren zum Herstellen eines dreidimensionalen Objekts 2 durch aufeinander folgendes Verfestigen von Schichten wenigstens eines mittels Strahlung verfestigbaren pulverartigen Baumaterials auf einer Bauplatte 3, umfassend folgende Verfahrensschritte:
- Ausbilden wenigstens eines die Außen- und/oder Innenkontur des herzustellenden dreidimensionalen Objekts 2 zumindest abschnittsweise abbildenden Begrenzungsbauteils 13 durch aufeinander folgendes Verfestigen von Schichten des oder wenigstens eines mittels Strahlung verfestigbaren pulverartigen Baumaterials zur Begrenzung eines die Außen- und/oder Innenkontur des herzustellenden dreidimensionalen Objekts 2 zumindest abschnittsweise abbildenden Bauvolumens 14,
- Ausbilden des herzustellenden dreidimensionalen Objekts 2 durch aufeinanderfolgendes Verfestigen von Schichten des oder wenigstens eines mittels Strahlung verfestigbaren pulverartigen Baumaterials innerhalb des durch das wenigstens eine Begrenzungsbauteil 13 begrenzten Bauvolumens 14.

## Beschreibung

Die Erfindung betrifft ein Verfahren zum Herstellen eines dreidimensionalen Objekts durch aufeinanderfolgendes Verfestigen von Schichten wenigstens eines mittels Strahlung verfestigbaren pulverartigen Baumaterials auf einer Bauplatte.

Derartige generative Verfahren zum Herstellen dreidimensionaler Objekte sind aus dem Stand der Technik an und für sich bekannt. Entsprechende Verfahren basieren auf dem Prinzip einer, typischerweise vermittels hochenergetischer Strahlung herbeigeführten, aufeinanderfolgenden Verfestigung von Schichten wenigstens eines mittels Strahlung verfestigbaren pulverartigen Baumaterials auf einer Bauplatte. Bekannte Beispiele für entsprechende Verfahren sind selektive Lasersinter-Verfahren, kurz SLS-Verfahren, und selektive Laserschmelzverfahren, kurz SLM-Verfahren.

Bei bekannten Verfahren wird eine entsprechende Bauplatte im Rahmen eines Bauvorgangs typischerweise (nahezu) vollflächig mit dem zu verfestigenden pulverartigen Baumaterial beschichtet. Die Beschichtung der Bauplatte mit dem zu verfestigenden pulverartigen Baumaterial erfolgt also insbesondere auch in Bauplattenbereichen, in welchen eine Verfestigung des zu verfestigenden Baumaterials im Hinblick auf die Geometrie, insbesondere den jeweiligen Querschnitt, des herzustellenden dreidimensionalen Objekts nicht zwingend erforderlich ist.

Eine derartige Beschichtung einer Bauplatte ist insbesondere in prozesstechnischer Hinsicht unter vielen Gesichtspunkten verbesserungswürdig; beispielsweise setzt das bei einer vollflächigen Beschichtung auf die Bauplatte wirkende Gewicht des Baumaterials eine entsprechende Stabilität und Lagerung der Bauplatte voraus und erschwert - für den Fall einer bewegbar gelagerten Bauplatte - eine präzise Bewegung der Bauplatte. Zudem bedingt eine vollflächige Beschichtung einer Bauplatte regelmäßig eine vergleichsweise "lange" Beschichtungs- und somit Bauzeit. Überdies ist eine vollflächige Beschichtung einer Bauplatte im Hinblick auf den Materialeinsatz verbesserungswürdig.

Der Erfindung liegt die Aufgabe zugrunde, ein demgegenüber verbessertes Verfahren zum Herstellen eines dreidimensionalen Objekts durch aufeinanderfolgendes Verfestigen von Schichten wenigstens eines mittels Strahlung verfestigbaren pulverartigen Baumaterials auf einer Bauplatte anzugeben.

Die Aufgabe wird durch ein Verfahren gemäß Anspruch 1 gelöst. Die Ansprüche 2 bis 18 betreffen vorteilhafte Ausführungen des Verfahrens. Die Aufgabe wird ferner durch eine Vorrichtung gemäß Anspruch 20 gelöst. Die Ansprüche 21 bis 31 betreffen vorteilhafte Ausführungen der Vorrichtung.

Das hierin beschriebene Verfahren umfasst zwei wesentliche Verfahrensschritte, welche im Weiteren näher erläutert werden.

In einem ersten Verfahrensschritt bzw. im Rahmen eines ersten Verfahrensschritts wird wenigstens ein Begrenzungsbauteil ausgebildet. Ein entsprechendes Begrenzungsbauteil bildet die Außen- und/oder Innenkontur des herzustellenden dreidimensionalen Objekts, im Weiteren abgekürzt als Objekt bezeichnet, zumindest abschnittsweise, insbesondere vollständig, ab bzw. folgt der Außen- und/oder Innenkontur des herzustellenden Objekts zumindest abschnittsweise, insbesondere vollständig. Das Begrenzungsbauteil wird also hinsichtlich seiner Geometrie, d. h. insbesondere seiner jeweiligen Querschnittsgeometrie bzw. -form, zumindest abschnittsweise konturgenau bzw. konturnah an die jeweilige Außenund/oder Innenkontur und somit die jeweilige Querschnittsgeometrie bzw. -form des herzustellenden Objekts angepasst ausgebildet. Im Allgemeinen entspricht die Geometrie, d. h. insbesondere die Querschnittsgeometrie bzw. -form, des Begrenzungsbauteils sonach zumindest abschnittsweise der Geometrie, d. h. insbesondere der Querschnittsgeometrie bzw. -form, des herzustellenden Objekts. Sollte sich die Querschnittsgeometrie bzw. -form des herzustellenden Objekts ändern, d. h. z. B. erweitern oder verringern, wie es z. B. bei einem kugel- oder pyramidenförmigen herzustellenden Objekt bzw. Objektabschnitt der Fall ist, ändert sich auch die Querschnittsgeometrie bzw. -form des Begrenzungsbauteils in hierzu entsprechender Weise, da das Begrenzungsbauteil der Querschnittsgeometrie bzw. - form des herzustellenden Objekts folgt.

Ein Begrenzungsbauteil kann die Außen- oder Innenkontur des herzustellenden Objekts, insbesondere in Außen- oder Innenumfangsrichtung und/oder Höhenrichtung des herzustellenden Objekts, vollständig abbilden. Selbstverständlich können mehrere Begrenzungsbauteile ausgebildet werden, welche jeweils einen bestimmten Bereich der Außen- oder Innenkontur des herzustellenden Objekts, insbesondere in Außen- oder Innenumfangsrichtung und/oder Höhenrichtung des herzustellenden Objekts, abbilden.

Für das Beispiel eines herzustellenden Objekts bzw. Objektabschnitts mit einer (zumindest abschnittsweisen) (kreis)runden bzw. rundlichen Querschnittsgeometrie bzw. -form kann ein Begrenzungsbauteil (zumindest abschnittsweise) mit einer hierzu entsprechenden (kreis)runden bzw. rundlichen Querschnittsgeometrie bzw. -form ausgebildet werden. Für das Beispiel eines herzustellenden Objekts bzw. Objektabschnitts mit einer (zumindest abschnittsweisen) ebenen oder eckigen Querschnittsgeometrie bzw. -form kann das Begrenzungsbauteil (zumindest abschnittsweise) mit einer hierzu entsprechenden ebenen oder eckigen Querschnittsgeometrie bzw. -form ausgebildet werden. Analoges gilt für andere als die vorstehend beispielhaft genannten Querschnittsgeometrien bzw. -formen.

Ein entsprechendes Begrenzungsbauteil begrenzt ein die Außen- und/oder Innenkontur des herzustellenden Objekts zumindest abschnittsweise, insbesondere vollständig, abbildendes Bauvolumen. Ein Begrenzungsbauteil dient sonach im Sinne einer Begrenzungs- oder Umgrenzungswandung einer konturgenauen bzw. konturnahen zumindest abschnittsweisen, insbesondere vollständigen, Begrenzung oder Umgrenzung der Außen- und/oder Innenkontur des herzustellenden Objekts. Ein herzustellendes bzw. hergestelltes Objekt schmiegt sich sonach typischerweise an die jeweiligen Außen- oder Innenwandungen des Begrenzungsbauteils an. Entsprechend kann es sich bei einem Begrenzungsbauteil, insbesondere wenn das Begrenzungsbauteil die Außenkontur des herzustellenden Objekts zumindest abschnittsweise abbildet, zumindest abschnittsweise um eine Negativform eines herzustellenden Objekts handeln.

Die Ausbildung eines entsprechenden Begrenzungsbauteils erfolgt durch aufeinanderfolgendes Verfestigen von Schichten wenigstens eines mittels Strahlung verfestigbaren pulverartigen Baumaterials. Das Begrenzungsbauteil wird also (ebenso wie das herzustellende Objekt) generativ ausgebildet bzw. aufgebaut. Bei dem zur Ausbildung des Begrenzungsbauteils verwendeten Baumaterial kann es sich um das Baumaterial handeln, welches im Weiteren auch zur Ausbildung des herzustellenden Objekts verwendet wird. Es kann sich jedoch auch um ein chemisch bzw. physikalisch andersartiges Baumaterial handeln.

In dem zweiten Verfahrensschritt bzw. im Rahmen des zweiten Verfahrensschritts wird das herzustellende Objekt generativ ausgebaut bzw. ausgebildet. Die Ausbildung des herzustellenden Objekts erfolgt entsprechend durch aufeinanderfolgendes Verfestigen von Schichten des oder wenigstens eines mittels Strahlung verfestigbaren pulverartigen Baumaterials, im Weiteren abgekürzt als Baumaterial bezeichnet, innerhalb des durch das wenigstens eine Begrenzungsbauteil begrenzten Bauvolumens. Dabei ist es im Rahmen der Ausbildung des herzustellenden Objekts möglich, dass vor dem Ausbilden und/oder zwischen einzelnen Verfestigungsschritten ein wenigstens teilweises Befüllen des durch das wenigstens eine Begrenzungsbauteil begrenzten Bauvolumens mit dem oder wenigstens einem Baumaterial zur Herstellung des Objekts erfolgt.

Dadurch, dass die Ausbildung des herzustellenden Objekts innerhalb des durch ein Begrenzungsbauteil begrenzten Bauvolumens erfolgt, ist das zur Ausbildung des herzustellenden Objekts verwendete Baumaterial nur in dem durch das Begrenzungsbauteil begrenzten Bauvolumen und somit nur in einem bestimmten begrenzten Bereich der Bauplatte vorzusehen. Zur Ausbildung des herzustellenden Objekts wird im Rahmen des Verfahrens verfestigbares Baumaterial also typischerweise nur innerhalb des durch das wenigstens eine Begrenzungsbauteil begrenzten Bauvolumens vorgesehen .Eine Vorsehung von Baumaterial und somit eine Beschichtung der Bauplatte ist somit nur innerhalb des durch das Begrenzungsbauteil begrenzten Bauvolumens erforderlich, eine weitergehende, insbesondere vollflächige, Beschichtung von außerhalb des durch das Begrenzungsbauteil begrenzten Bauvolumens liegenden Bereichen der Bauplatte ist dagegen nicht erforderlich.

Grundsätzlich ist es denkbar, dass zumindest ein Teil des wenigstens einen Begrenzungsbauteils und zumindest ein Teil des herzustellenden Objektes gleichzeitig bzw. simultan ausgebildet werden. Der erste Verfahrensschritt und der zweite Verfahrensschritt können also (zumindest zeitweise) simultan ausgeführt werden. Die simultane Ausbildung eines Begrenzungsbauteils und des herzustellenden Objekts bedingt einen besonders zeitsparenden generativen Bauvorgang. Selbstverständlich kann das herzustellende Objekt auch erst nach (zumindest weitgehend) fertiger Ausbildung eines Begrenzungsbauteils ausgebildet werden.

Das Verfahren bringt eine Reihe von Vorteilen mit sich: durch die, wie beschrieben, begrenzte Vorsehung des Baumaterials zur Ausbildung des Objekts bzw. die auf das durch das Begrenzungsbauteil begrenzte Bauvolumen begrenzte Beschichtung der Bauplatte kann das auf die Bauplatte wirkende Gewicht des Baumaterials erheblich reduziert werden. Es können sonach im Vergleich weniger stabil ausgeführte bzw. gelagerte Bauplatten verwendet werden. Für den Fall bewegbar gelagerter Bauplatten ist eine präzisere Bewegung der Bauplatte möglich. Zudem können Beschichtungs- und somit Bauzeiten sowie der Materialeinsatz reduziert werden.

Insgesamt liegt damit ein verbessertes Verfahren zum Herstellen eines dreidimensionalen Objekts durch aufeinander folgendes Verfestigen von Schichten wenigstens eines mittels Strahlung verfestigbaren pulverartigen Baumaterials auf einer Bauplatte vor.

Im Allgemeinen kann das hierin beschriebene Verfahren als ein selektiver Lasersinter- oder Laserschmelzprozess implementiert werden oder im Rahmen eines selektiven Lasersinter- oder Laserschmelzprozesses implementiert werden.

Bei den im Rahmen des hierin beschriebenen Verfahrens verwendbaren bzw. verwendeten Baumaterialien kann es sich z. B. um im Rahmen entsprechender generativer Bauprozesse verarbeitbare Metalle bzw. Metallmischungen, Kunststoffe bzw. Kunststoffmischungen, Keramiken bzw. Keramikmischungen oder Mischungen der Genannten handeln. Beispiele für geeignete Metalle sind pulverartige bzw. -förmige Eisenwerkstoffe, z. B. Stähle, Beispiele für geeignete Kunststoffe sind pulverartige bzw. -förmige Thermoplaste, z. B. PA, PEEK, Beispiele für geeignete Keramiken sind pulverartige Siliziumkeramiken.

Das wenigstens eine Begrenzungsbauteil und/oder das herzustellende Objekt können aus gleichen oder aus wenigstens zwei unterschiedlichen pulverartigen Baumaterialien ausgebildet werden. Grundsätzlich ist zu beachten, dass sich keine Verbindung zwischen dem Begrenzungsbauteil und dem herzustellenden Objekt ergibt, was beispielsweise durch prozesstechnische Parameter, wie z. B. eine zeitliche versetzte Ausbildung des Begrenzungsbauteils und des herzustellenden Objekts, und/oder die Verwendung schwer oder nicht verträglicher Materialpaarungen gewährleistet werden kann.

Im Hinblick auf den konstruktiven bzw. strukturellen Aufbau des herzustellenden Objekts und die damit verbundene Ausbildung des Begrenzungsbauteils, d. h. insbesondere den Aspekt, ob das Begrenzungsbauteil (nur) die Außenkontur, (nur) die Innenkontur oder sowohl die Außen- als auch die Innenkontur des herzustellenden Objekts abbildet, werden im Folgenden einige erläuternde Beispiele dargestellt.

Bei einem massiven herzustellenden Objekt wird typischerweise wenigstens ein die Außenkontur des herzustellenden Objekts zumindest abschnittsweise abbildendes Begrenzungsbauteil ausgebildet. Analog dazu wird bei einem wenigstens einen massiven Objektabschnitt aufweisenden herzustellenden Objekt zumindest im Bereich des wenigstens einen massiven Objektabschnitts ein die Außenkontur des herzustellenden Objekts abbildendes Begrenzungsbauteil ausgebildet. Das oder die Begrenzungsbauteil(e) bildet bzw. bilden hier eine die Außenkontur des herzustellenden Objekts konturgenau bzw. konturnah zumindest abschnittsweise, insbesondere vollständig, umgebende Begrenzungs- bzw. Umgrenzungswandung. Beispiele für massive Objekte sind Klötze, Quader, Stangen, Würfel oder dergleichen. Beispiele für massive Objektabschnitte sind entsprechend klotz-, quader-, stangen- oder würfelförmige Objektabschnitte.

Bei einem hohlen herzustellenden Objekt wird typischerweise wenigstens ein die Außenkontur und die Innenkontur des herzustellenden Objekts zumindest abschnittsweise abbildendes Begrenzungsbauteil ausgebildet. Bei einem wenigstens einen hohlen Objektabschnitt aufweisenden herzustellenden Objekt wird typischerweise zumindest im Bereich des hohlen Objektabschnitts ein die Innenkontur des hohlen Objektabschnitts abbildendes Begrenzungsbauteil ausgebildet. Das oder die Begrenzungsbauteil(e) bildet bzw. bilden hier eine die Außenkontur und die Innenkontur des herzustellenden Objekts konturgenau bzw. konturnah zumindest abschnittsweise, insbesondere vollständig, umgebende Begrenzungs- bzw. Umgrenzungswandung. Beispiele für hohle Objekte sind Hohlräume aufweisende Klötze, Quader, Stangen (Hohlzylinder), Würfel oder dergleichen. Beispiele für hohle Objektabschnitte sind entsprechend klotz-, quader-, stangen- oder würfelförmige Hohlräume bildende Objektabschnitte.

Im Allgemeinen gilt, dass es sich bei einem entsprechenden Begrenzungsbauteil um einen Vollkörper oder um einen Hohlkörper handeln kann.

Ein Begrenzungsbauteil kann aus mehreren Begrenzungsbauteilabschnitten bestehen bzw. mehrere Begrenzungsbauteilabschnitte umfassen. Mehrere Begrenzungsbauteilabschnitte können sonach ein Begrenzungsbauteil bilden. Ein erster Begrenzungsbauteilabschnitt kann beispielsweise die Außenkontur des herzustellenden Objekts zumindest abschnittsweise abbilden. Ein weiterer Begrenzungsbauteilabschnitt kann beispielsweise die Innenkontur des herzustellenden Objekts zumindest abschnittsweise abbilden. Selbstverständlich können Begrenzungsbauteilabschnitte auch in vertikaler Richtung übereinander ausgebildet werden.

Um ein gutes Verfestigungsergebnis des zu verfestigenden Baumaterials im Rahmen der Ausbildung des herzustellenden Objekts zu erhalten, ist eine möglichst ebene bzw. glatte Oberfläche des zu verfestigenden Baumaterials zweckmäßig. Insofern kann innerhalb des ausgebildeten Bauvolumens befindliches Baumaterial vor der Verfestigung und/oder zwischen einzelnen Verfestigungsschritten, in welchen jeweils einzelne verfestigte Schichten ausgebildet werden, geebnet bzw. geglättet werden. Hierfür kann eine Ebnungseinrichtung, z. B. in Form wenigstens eines oder umfassend wenigstens ein Rakel, einen Wischer oder dergleichen, verwendet werden. Analoges gilt selbstverständlich für die Ausbildung eines entsprechenden Begrenzungsbauteils.

Nicht zu verfestigendes oder nicht verfestigtes Baumaterial kann vor und/oder während und/oder nach der Ausbildung des wenigstens einen Begrenzungsbauteils und/oder des herzustellenden Objekts von der Bauplatte entfernt werden. Derart ist es insbesondere möglich, die Bauplatte durch das Gewicht des ohnehin nicht zu verfestigenden oder verfestigten Baumaterials nicht unnötig zu belasten. Von der Bauplatte entferntes Baumaterial kann, gegebenenfalls nach einer Aufbereitung, im Rahmen desselben oder eines anderen generativen Bauvorgangs wiederverwendet werden. Die Entfernung von nicht zu verfestigendem oder nicht verfestigtem Baumaterial von der Bauplatte kann kontinuierlich oder diskontinuierlich, d. h. zu bestimmten Zeitpunkten bzw. in bestimmten Zeitintervallen, erfolgen.

Die Entfernung von nicht zu verfestigendem oder nicht verfestigtem Baumaterial von der Bauplatte kann durch Abblasen mittels einer Gebläseströmung oder durch Absaugen mittels einer Saugströmung erfolgen. Es kann also vorgesehen sein, vermittels geeigneter Saug- oder Gebläseeinrichtungen eine entsprechende Saug- oder Gebläseströmung auszubilden, um nicht zu verfestigendes oder nicht verfestigtes Baumaterial von der Bauplatte abzusaugen bzw. abzublasen und so von der Bauplatte zu entfernen.

In diesem Zusammenhang kann es zweckmäßig sein, in dem wenigstens einen oder allgemein wenigstens einem Begrenzungsbauteil wenigstens eine einen von einer Saug- und/oder Gebläseströmung durchströmbaren Strömungskanal umfassende Strömungskanalstruktur auszubilden. Eine entsprechende Strömungskanalstruktur kann ein Netzwerk aus miteinander kommunizierenden, ein entsprechendes Begrenzungsbauteil zumindest abschnittsweise durchsetzenden Strömungskanälen umfassen. Entsprechende begrenzungsbauteilseitige Strömungskanäle bzw. Strömungskanalstrukturen können in nahezu beliebigen Geometrien, d. h. insbesondere auch Strömungsquerschnitten, ohne weiteres im Rahmen der generativen Ausbildung des Begrenzungsbauteils ausgebildet werden. Entsprechende Strömungskanäle bzw. Strömungskanalstrukturen sind zweckmäßig an eine Saug- oder Gebläseeinrichtung zur Erzeugung einer entsprechenden Saug- oder Gebläseströmung anschließbar bzw. angeschlossen.

Im Rahmen des Verfahrens kann eine zumindest abschnittsweise poröse Bauplatte verwendet werden. Die Verwendung einer zumindest abschnittsweise porösen Bauplatte kann insofern zweckmäßig sein, als Baumaterial durch die Bauplatte in eine, beispielsweise unterhalb dieser anordenbare oder angeordnete, Auffang- oder Sammeleinrichtung gelangen bzw. gefördert werden kann. Derart kann nicht zu verfestigendes bzw. nicht verfestigtes Baumaterial aufgefangen bzw. aufgesammelt und gegebenenfalls im Rahmen desselben oder eines anderen generativen Bauvorgangs wiederverwendet werden. Die Porosität der Bauplatte bestimmt sich insbesondere nach den Pulver- bzw. Partikeleigenschaften, d. h. insbesondere der Pulver- bzw. Partikelgröße, des jeweils verwendeten Baumaterials. Zweckmäßig wird die Porosität der Bauplatte derart gewählt, dass nicht zu verfestigendes oder nicht verfestigtes Baumaterial durch die Bauplatte in eine, beispielsweise unterhalb dieser anordenbare oder angeordnete, Auffang- oder Sammeleinrichtung förderbar ist.

Im Rahmen des Verfahrens können, beispielsweise bezüglich wenigstens eines horizontalen und/oder vertikalen Bewegungsfreiheitsgrads, bewegbare oder nicht bewegbare Bauplatten verwendet werden. Allgemein können zumindest in einer vertikalen Richtung nicht bewegbar gelagerte Bauplatte oder zumindest in einer horizontalen Richtung, insbesondere in einer horizontalen Ebene, bewegbar gelagerte Bauplatte verwendet werden. Bewegbare Bauplatten können in wenigstens einem Bewegungsfreiheitsgrad, beispielsweise in einer vertikalen und/oder horizontalen Ebene, bewegt werden. Entsprechende Bewegungen einer Bauplatte können beispielsweise über eine Lagerung der Bauplatte auf einem Kreuztisch realisiert werden. Nicht bewegbare, d. h. insbesondere nicht in einem horizontalen Bewegungsfreiheitsgrad, bewegbare Bauplatten können sich insoweit positiv auf den generativen Bauvorgang auswirken, als diese ausschließlich als solider Untergrund für den generativen Bauvorgang dienen, wodurch sich herzustellende Objekte mit besonders exakter Bauteilgeometrie herstellen lassen, da entsprechende nicht bewegbare Bauplatten im Vergleich zu bewegbaren Bauplatten nicht (um eine horizontale Achse) verkippen können und derart keine Ungenauigkeiten in den generativen Bauvorgang "einstreuen".

Um eine für den generativen Bauvorgang zweckmäßige Temperierung des Baumaterials zu ermöglichen, kann eine zumindest abschnittsweise mit einer Temperiereinrichtung zum Temperieren der Bauplatte ausgestattete Bauplatte verwendet werden. Eine entsprechende Temperiereinrichtung kann beispielsweise eine die Bauplatte zumindest abschnittsweise, beispielsweise mäanderartig durchsetzende, von einem fluiden Temperiermedium durchströmbare Temperierkanalstruktur umfassen. Im Zusammenhang mit einer Beheizung der Bauplatte kann die oder eine entsprechende Temperiereinrichtung, gegebenenfalls zusätzlich, elektrische Heizelemente, d. h. z. B. Widerstandsheizelemente, in entsprechender Anordnung umfassen.

Die im Rahmen des Verfahrens verwendete Bauplatte kann segmentiert sein. Mit anderen Worten kann eine aus mehreren separaten Bauplattensegmenten gebildete Bauplatte verwendet werden.

Das wenigstens eine Begrenzungsbauteil und/oder das hergestellte Objekt kann nach Beendigung des generativen Bauvorgangs von der Bauplatte, d. h. insbesondere von der Oberfläche der Bauplatte, abgetrennt werden. Hierfür kann wenigstens eine wenigstens ein Trennelement, d. h. z. B. ein Trennmesser oder eine rotierbare Trennsäge, aufweisende, insbesondere bewegbar relativ zu der Bauplatte gelagerte, Trenneinrichtung verwendet werden.

Neben dem Verfahren betrifft die Erfindung auch ein gemäß dem Verfahren hergestelltes dreidimensionales Objekt.

Außerdem betrifft die Erfindung eine Vorrichtung zur Durchführung des Verfahrens. Die Vorrichtung ist zur Durchführung eines generativen Bauvorgangs zur Herstellung eines dreidimensionalen Objekts eingerichtet und umfasst im Allgemeinen sämtliche zur Durchführung eines solchen generativen Bauvorgangs, im Besonderen zur Durchführung des Verfahrens erforderliche Einrichtungen. Hierzu zählen neben wenigstens einer Strahlungserzeugungseinrichtung zum Erzeugen von energetischer Strahlung, z. B. Laserstrahlung, zum Verfestigen von Schichten wenigstens eines mittels Strahlung verfestigbaren pulverartigen Baumaterials, wenigstens einer optionalen Strahlungsablenkeinrichtung zum gezielten Ablenken eines energetischen Strahls, z. B. eines Laserstrahls, auf einen bestimmten Bereich einer Bauplatte, wenigstens einer Absaug- und/oder Spüleinrichtung zum Absaugen von im Rahmen eines generativen Bauvorgangs entstehenden Schmauchgasen und zur Spülung mit Frischgas, d. h. z. B. einem Inertgas, wenigstens einer Dosierungseinrichtung zum Dosieren von Baumaterial und wenigstens einer Beschichtungseinrichtung zum Beschichten einer Bauplatte mit einem entsprechenden Baumaterial auch wenigstens eine, gegebenenfalls zumindest in einem Bewegungsfreiheitsgrad bewegbar gelagerte, Bauplatte. Die genannten Einrichtungen sind typischerweise zumindest abschnittsweise in einer Prozess- bzw. Baukammer der Vorrichtung angeordnet bzw. ausgebildet.

Sämtliche Ausführungen bezüglich des Verfahrens gelten analog für die Vorrichtung und umgekehrt.

Entsprechend kann die Vorrichtung wenigstens eine Entfernungseinrichtung zum Entfernen von nicht zu verfestigendem oder nicht verfestigtem Baumaterial von einer Bauplatte umfassen. Eine entsprechende Entfernungseinrichtung kann als eine Gebläse- oder Saugeinrichtung zur Erzeugung einer Gebläse- oder Saugströmung, mittels welcher nicht zu verfestigendes oder nicht verfestigtes Baumaterial von der Bauplatte durch Abblasen mittels einer Gebläseströmung oder durch Absaugen mittels einer Saugströmung entfernt wird, ausgebildet sein oder wenigstens eine solche Gebläse- oder Saugeinrichtung umfassen. Eine entsprechende Gebläse- oder Saugeinrichtung ist an entsprechende Strömungskanäle bzw. Strömungskanalstrukturen innerhalb eines Begrenzungsbauteils anschließbar bzw. angeschlossen.

Die Vorrichtung kann eine zumindest abschnittsweise poröse Bauplatte umfassen. Die Porosität der Bauplatte ist zweckmäßig derart gewählt, dass nicht verfestigtes Baumaterial durch die Bauplatte in eine, beispielsweise unterhalb dieser anordenbare oder angeordnete, Auffang- oder Sammeleinrichtung förderbar ist. Mithin kann die Vorrichtung auch eine entsprechende Auffang- oder Sammeleinrichtung umfassen.

Die Bauplatte kann zumindest in einer vertikalen Richtung nicht bewegbar gelagert oder zumindest in einer horizontalen Richtung, insbesondere in einer horizontalen Ebene, bewegbar gelagert sein.

Die Bauplatte kann zumindest abschnittsweise mit einer Temperiereinrichtung zum Temperieren der Bauplatte ausgestattet sein. Eine entsprechende Temperiereinrichtung kann beispielsweise eine die Bauplatte zumindest abschnittsweise, beispielsweise mäanderartig durchsetzende, von einem fluiden Temperiermedium durchströmbare Temperierkanalstruktur umfassen. Die oder eine entsprechende Temperiereinrichtung kann, gegebenenfalls zusätzlich, elektrische Heizelemente, d. h. z. B. elektrische Widerstandsheizelemente, in entsprechender Anordnung umfassen.

Die Vorrichtung kann ferner eine Glättungs- bzw. Ebnungseinrichtung zur Glättung bzw. Ebnung von innerhalb eines Bauvolumens befindlichem Baumaterial umfassen. Eine entsprechende Glättungs- bzw. Ebnungseinrichtung kann, z. B. in Form wenigstens eines Rakels, eines Wischers oder dergleichen ausgebildet sein oder wenigstens ein Rakel, einen Wischer oder dergleichen umfassen.

Die Vorrichtung kann wenigstens eine wenigstens ein Trennelement, insbesondere ein Messer- oder Sägeelement, aufweisende, insbesondere bewegbar relativ zu der Bauplatte gelagerte, Trenneinrichtung zum Abtrennen wenigstens eines Begrenzungsbauteils und/oder wenigstens eines hergestellten Objekts von der Bauplatte, d. h. insbesondere von der Oberfläche der Bauplatte, umfassen.

Die Bauplatte kann segmentiert, d. h. aus mehreren separaten Bauplattensegmenten ausgebildet sein.

Schließlich kann die Vorrichtung in einer hermetisch abdichtbaren bzw. abgedichteten respektive hermetisch abriegelbaren oder abgeriegelten Kammer angeordnet sein. Derart können den generativen Bauvorgang gegebenenfalls negativ beeinflussende äußere Einflüsse von dem generativen Bauvorgang ferngehalten werden. In der Kammer kann zumindest zeitweise, insbesondere während der Durchführung generativer Bauvorgänge, ein besonderes Druckniveau und/oder eine inerte Atmosphäre ausgebildet werden. Die Kammer kann über wenigstens eine dieser zugehörige Schleuse zugänglich sein.

Die Erfindung ist anhand von Ausführungsbeispielen in den Zeichnungsfiguren näher erläutert. Dabei zeigen:

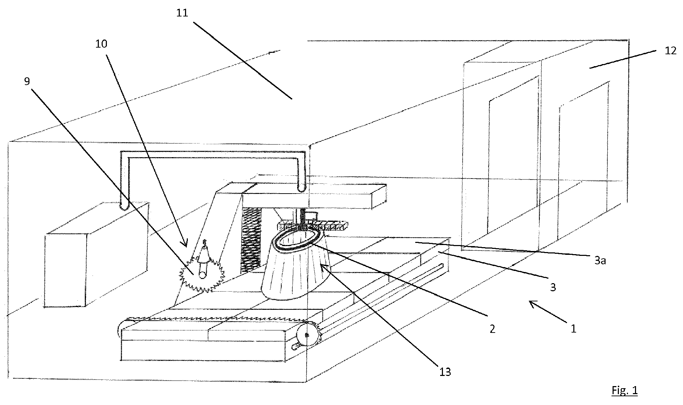

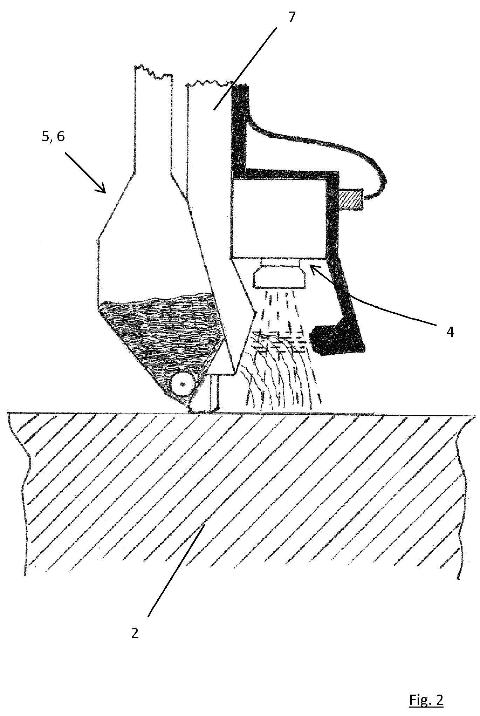

- Fig. 1, 2: je eine Prinzipdarstellung einer Vorrichtung zur Durchführung eines Verfahrens zum Herstellen eines dreidimensionalen Objekts durch aufeinander folgendes Verfestigen von Schichten wenigstens eines mittels Strahlung verfestigbaren pulverartigen Baumaterials auf einer Bauplatte gemäß einem Ausführungsbeispiel; und

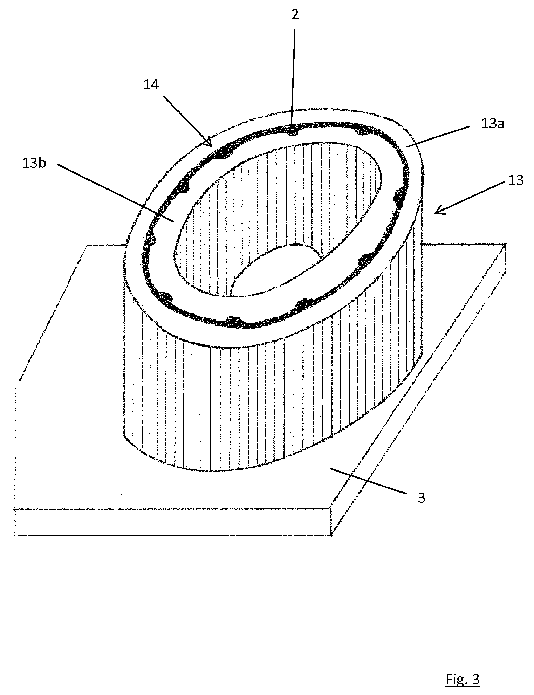

- Fig. 3 - 9: je eine Prinzipdarstellung eines Objekts im Rahmen der Durchführung eines Verfahrens zum Herstellen eines dreidimensionalen Objekts durch aufeinander folgendes Verfestigen von Schichten wenigstens eines mittels Strahlung verfestigbaren pulverartigen Baumaterials auf einer Bauplatte gemäß einem Ausführungsbeispiel.

Fig. 1 zeigt eine Prinzipdarstellung einer Vorrichtung 1 zur Durchführung eines Verfahrens zum Herstellen eines dreidimensionalen Objekts 2 durch aufeinanderfolgendes Verfestigen von Schichten wenigstens eines mittels Strahlung verfestigbaren pulverartigen Baumaterials auf einer Bauplatte 3 gemäß einem Ausführungsbeispiel in einer perspektivischen Darstellung. Fig. 2 zeigt eine Vergrößerung der in Fig. 1 gezeigten Einzelheit II.

Die Vorrichtung 1 umfasst eine, hier aus mehreren Bauplattensegmenten 3a gebildete Bauplatte 3, eine Strahlungserzeugungseinrichtung 4 zum Erzeugen von energetischer Strahlung, z. B. Laserstrahlung, zum Verfestigen von Schichten wenigstens eines mittels Strahlung verfestigbaren pulverartigen Baumaterials, eine Dosierungseinrichtung 5 zum Dosieren von Baumaterial, eine Beschichtungseinrichtung 6 zum Beschichten der Bauplatte 3 oder einer bereits verfestigten Schicht eines herzustellenden Objekts 2 mit einem entsprechenden Baumaterial und eine kombinierte Absaug- und Spüleinrichtung 7 zum Absaugen von im Rahmen eines generativen Bauvorgangs entstehenden Schmauchgasen und zur Spülung mit Frischgas, d. h. z. B. einem Inertgas, (vgl. insbesondere Fig. 2) und eine ein Trennelement 9, insbesondere ein Messer- oder Sägeelement, aufweisende, bewegbar relativ zu der Bauplatte 3 gelagerte Trenneinrichtung 10. Die Vorrichtung 1 kann ferner eine Strahlungsablenkeinrichtung (nicht gezeigt) zum gezielten Ablenken eines von der Strahlungserzeugungseinrichtung 4 erzeugten energetischen Strahls, z. B. eines Laserstrahls, auf einen bestimmten Bereich der Bauplatte 3 oder einer bereits verfestigten Schicht eines herzustellenden Objekts 2 umfassen.

Die genannten Einrichtungen der Vorrichtung 1 sind in einer nicht näher bezeichneten Prozess- bzw. Baukammer der Vorrichtung 1 angeordnet bzw. ausgebildet.

Ersichtlich sind die genannten Einrichtungen in einer hermetisch abriegelbaren oder abgeriegelten Kammer 11 der Vorrichtung 1 angeordnet. Derart können einen generativen Bauvorgang gegebenenfalls negativ beeinflussende äußere Einflüsse von dem generativen Bauvorgang ferngehalten werden. In der Kammer 11 kann zumindest zeitweise, insbesondere während der Durchführung eines generativen Bauvorgangs, ein besonderes Druckniveau und/oder eine inerte Atmosphäre ausgebildet werden. Die Kammer 11 ist über eine dieser zugehörige Schleuse 12 zugänglich. Über die Schleuse 12 können Gegenstände, insbesondere auch fertig hergestellte Objekte 2, Materialien, etc. aus der Kammer 11 entfernt und in die Kammer 11 eingebracht werden. Benutzer können die Kammer 11 über die Schleuse 12 betreten.

Vermittels der Vorrichtung 1 lässt sich ein generativer Bauvorgang zum Herstellen von dreidimensionalen Objekten 2 durch aufeinanderfolgendes Verfestigen von Schichten wenigstens eines mittels Strahlung verfestigbaren pulverartigen Baumaterials und somit ein Verfahren gemäß einem Ausführungsbeispiel der hierin beschriebenen Erfindung durchführen. Im Zusammenhang mit der nachfolgenden Erläuterung des Verfahrens wird auch auf die Fig. 3 - 9 verwiesen, welche je eine Prinzipdarstellung eines Objekts 2 im Rahmen der Durchführung des Verfahrens zeigen.

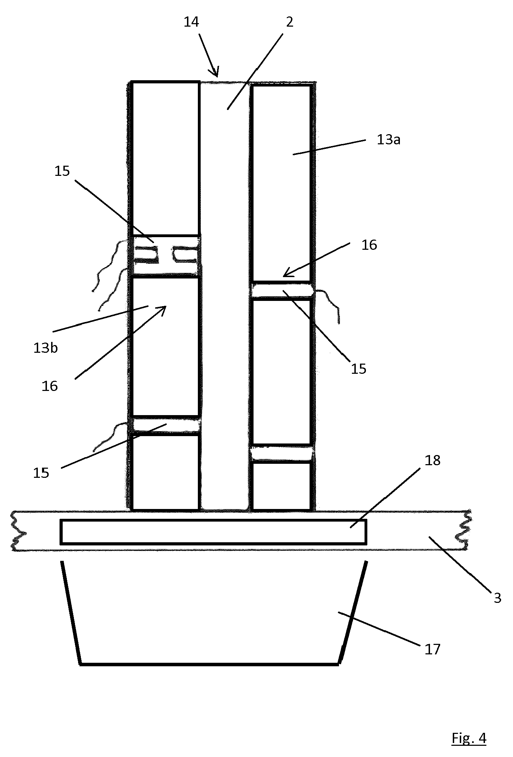

In einem ersten Verfahrensschritt bzw. im Rahmen eines ersten Verfahrensschritts wird ein Begrenzungsbauteil 13 ausgebildet (vgl. hierzu auch die perspektivische Darstellung gemäß Fig. 3 und die geschnittene Darstellung gemäß Fig. 4). Das Begrenzungsbauteil 13 bildet die Außen- und Innenkontur des herzustellenden, in den Fig. 3, 4 ringförmigen Objekts 2 ab bzw. folgt der Außen- und Innenkontur des herzustellenden Objekts 2. Das Begrenzungsbauteil 13 wird also hinsichtlich seiner Geometrie, d. h. insbesondere seiner jeweiligen Querschnittsgeometrie bzw. -form, konturgenau bzw. konturnah an die jeweilige Außen- bzw. Innenkontur und somit die jeweilige Querschnittsgeometrie bzw. -form des herzustellenden Objekts 2 angepasst ausgebildet. Das Begrenzungsbauteil 13 dient im Sinne einer Begrenzungs- oder Umgrenzungswandung einer konturgenauen bzw. konturnahen Begrenzung oder Umgrenzung der Außen- bzw. Innenkontur des herzustellenden Objekts 2. Das herzustellende bzw. hergestellte Objekt 2 "schmiegt" sich sonach an die jeweiligen Außen- oder Innenwandungen des Begrenzungsbauteils 13 an (vgl. insbesondere Fig. 3, 4).

Im Allgemeinen entspricht die Geometrie, d. h. insbesondere die Querschnittsgeometrie bzw. -form, des Begrenzungsbauteils 13 sonach der Geometrie, d. h. insbesondere der Querschnittsgeometrie bzw. -form, des herzustellenden Objekts 2. Sollte sich die Querschnittsgeometrie bzw. -form des herzustellenden Objekts ändern, d. h. z. B. erweitern oder verringern, wie es z. B. bei einem kugel- oder pyramidenförmigen herzustellenden Objekt 2 bzw. Objektabschnitt der Fall ist, ändert sich auch die Querschnittsgeometrie bzw. - form des Begrenzungsbauteils 13 in hierzu entsprechender Weise.

In dem in den Fig. 1 - 4 gezeigten Beispiel umfasst das Begrenzungsbauteil 13 einen der die Außenkontur des Objekts 2 folgenden äußeren Begrenzungsbauteilabschnitt 13a und einen der Innenkontur des Objekts 2 folgenden inneren Begrenzungsbauteilabschnitt 13b. Selbstverständlich könnten die Begrenzungsbauteilabschnitte 13a, 13b auch als separate Begrenzungsbauteil 13 erachtet werden. In jedem Fall ist durch das Begrenzungsbauteil 13 ein Bauvolumen 14 begrenzt, in welchem das herzustellende Objekt 2 generativ ausgebildet bzw. aufgebaut wird. Entsprechend entspricht die Geometrie des Bauvolumens 14 der Geometrie des herzustellenden Objekts 2.

Die Ausbildung des Begrenzungsbauteils 13 erfolgt in einem generativen Bauvorgang, d. h. durch aufeinanderfolgendes Verfestigen von Schichten wenigstens eines mittels Strahlung verfestigbaren pulverartigen Baumaterials. Das Begrenzungsbauteil 13 wird also (ebenso wie das herzustellende Objekt 2) generativ ausgebildet bzw. aufgebaut. Das Begrenzungsbauteil 13 muss nicht vollständig verfestigt sein, sondern kann zumindest abschnittsweise nicht verfestigt, d. h. weiterhin pulverförmig, vorliegen. Dies gilt insbesondere für den Fall, in dem das Begrenzungsbauteil 13, gegebenenfalls auch das herzustellende Objekt 2, in einem selektiven Laserschmelzprozess, kurz SLM-Prozess, ausgebildet wird.

In einem zweiten Verfahrensschritt bzw. im Rahmen eines zweiten Verfahrensschritts wird das herzustellende Objekt 2 generativ ausgebaut bzw. ausgebildet. Die Ausbildung des herzustellenden Objekts 2 erfolgt entsprechend durch aufeinanderfolgendes Verfestigen von Schichten des oder wenigstens eines mittels Strahlung verfestigbaren pulverartigen Baumaterials innerhalb des durch das Begrenzungsbauteil 13 begrenzten Bauvolumens 14. Dabei ist es im Rahmen der Ausbildung des herzustellenden Objekts 2 möglich, dass vor dem Ausbilden und/oder zwischen einzelnen Verfestigungsschritten ein wenigstens teilweises Befüllen des durch das Begrenzungsbauteil 13 begrenzten Bauvolumens 14 mit dem oder wenigstens einem Baumaterial zur Herstellung des Objekts 2 erfolgt.

Dadurch, dass die Ausbildung des herzustellenden Objekts 2 innerhalb des durch das Begrenzungsbauteil 13 begrenzten Bauvolumens 14 erfolgt, ist das zur Ausbildung des herzustellenden Objekts 2 verwendete Baumaterial nur in dem durch das Begrenzungsbauteil 13 begrenzten Bauvolumen 14 und somit nur in einem bestimmten begrenzten Bereich der Bauplatte 3 vorzusehen. Zur Ausbildung des herzustellenden Objekts 2 wird verfestigbares Baumaterial also nur innerhalb des durch das Begrenzungsbauteil 13 begrenzten Bauvolumens 14 vorgesehen .Eine Vorsehung von Baumaterial und somit eine Beschichtung der Bauplatte 3 ist somit nur innerhalb des durch das Begrenzungsbauteil 13 begrenzten Bauvolumens 14 erforderlich, eine weitergehende, insbesondere vollflächige, Beschichtung von außerhalb des durch das Begrenzungsbauteil 13 begrenzten Bauvolumens 14 liegenden Bereichen der Bauplatte 3 ist dagegen nicht erforderlich.

Grundsätzlich ist es denkbar, dass zumindest ein Teil des Begrenzungsbauteils 13 und zumindest ein Teil des herzustellenden Objektes 2 gleichzeitig bzw. simultan ausgebildet werden. Der erste Verfahrensschritt und der zweite Verfahrensschritt können also (zumindest zeitweise) simultan ausgeführt werden. Selbstverständlich kann das herzustellende Objekt 2 auch erst nach (zumindest weitgehend) fertiger Ausbildung des Begrenzungsbauteils 13 ausgebildet werden.

Das Verfahren bringt eine Reihe von Vorteilen mit sich: durch die begrenzte Vorsehung des Baumaterials zur Ausbildung des Objekts 2 bzw. die auf das durch das Begrenzungsbauteil 13 begrenzte Bauvolumen 14 begrenzte Beschichtung der Bauplatte 3 kann das auf die Bauplatte 3 wirkende Gewicht des Baumaterials erheblich reduziert werden. Es können sonach im Vergleich weniger stabil ausgeführte bzw. gelagerte Bauplatten 3 verwendet werden. Für den Fall einer bewegbar gelagerter Bauplatte 3 ist eine präzisere Bewegung der Bauplatte 3 möglich. Zudem können Beschichtungs- und somit Bauzeiten sowie der Materialeinsatz reduziert werden.

Um ein gutes Verfestigungsergebnis des zu verfestigenden Baumaterials im Rahmen der Ausbildung des herzustellenden Objekts 2 zu erhalten, ist eine möglichst ebene bzw. glatte Oberfläche des zu verfestigenden Baumaterials zweckmäßig. Insofern kann innerhalb des ausgebildeten Bauvolumens 14 befindliches Baumaterial vor der Verfestigung und/oder zwischen einzelnen Verfestigungsschritten, in welchen jeweils einzelne verfestigte Schichten ausgebildet werden, geebnet bzw. geglättet werden. Hierfür kann eine der Vorrichtung 1 zugehörige Ebnungseinrichtung (nicht gezeigt), z. B. in Form wenigstens eines oder umfassend wenigstens ein Rakel, einen Wischer oder dergleichen, verwendet werden. Analoges gilt selbstverständlich für die Ausbildung eines Begrenzungsbauteils 13.

Nicht zu verfestigendes oder nicht verfestigtes Baumaterial kann vor und/oder während und/oder nach der Ausbildung eines Begrenzungsbauteils 13 und/oder des herzustellenden Objekts 2 von der Bauplatte 3 entfernt werden. Von der Bauplatte 3 entferntes Baumaterial kann, gegebenenfalls nach einer Aufbereitung, im Rahmen desselben oder eines anderen generativen Bauvorgangs wiederverwendet werden. Die Entfernung von nicht zu verfestigendem oder nicht verfestigtem Baumaterial von der Bauplatte 3 kann kontinuierlich oder diskontinuierlich, d. h. zu bestimmten Zeitpunkten bzw. in bestimmten Zeitintervallen, erfolgen.

Die Entfernung von nicht zu verfestigendem oder nicht verfestigtem Baumaterial von der Bauplatte 3 kann durch Abblasen mittels einer Gebläseströmung oder durch Absaugen mittels einer Saugströmung erfolgen. Es kann also vorgesehen sein, vermittels geeigneter Saug- oder Gebläseeinrichtungen (nicht gezeigt) eine entsprechende Saug- oder Gebläseströmung auszubilden, um nicht zu verfestigendes oder nicht verfestigtes Baumaterial von der Bauplatte 3 abzusaugen bzw. abzublasen und so von der Bauplatte 3 zu entfernen. Zu diesem Zweck kann in dem Begrenzungsbauteil 13 eine wenigstens einen von einer Saug- und/oder Gebläseströmung durchströmbaren Strömungskanal 15 umfassende Strömungskanalstruktur 16 ausgebildet werden (vgl. Fig. 4). Eine entsprechende Strömungskanalstruktur 16 kann ein in Fig. 4 angedeutetes Netzwerk aus miteinander kommunizierenden, das Begrenzungsbauteil 13 abschnittsweise durchsetzenden Strömungskanälen 15 umfassen. Entsprechende Strömungskanäle 15 bzw. Strömungskanalstrukturen 16 sind, wie angedeutet, an eine Saug- oder Gebläseeinrichtung (nicht gezeigt) zur Erzeugung einer entsprechenden Saug- oder Gebläseströmung anschließbar bzw. angeschlossen. Entsprechende Saug- oder Gebläseeinrichtungen können Teil einer nicht näher bezeichneten Entfernungseinrichtung zum Entfernen von nicht zu verfestigendem oder nicht verfestigtem Baumaterial von der Bauplatte 3 sein.

Im Rahmen des Verfahrens kann eine zumindest abschnittsweise poröse Bauplatte 3 verwendet werden. Die Verwendung einer zumindest abschnittsweise porösen Bauplatte ist insofern zweckmäßig sein, als Baumaterial durch die Bauplatte 3 in eine Auffang- oder Sammeleinrichtung 17 gelangen bzw. gefördert werden kann (vgl. Fig. 4). Derart kann nicht zu verfestigendes bzw. nicht verfestigtes Baumaterial aufgefangen bzw. aufgesammelt und gegebenenfalls im Rahmen desselben oder eines anderen generativen Bauvorgangs wiederverwendet werden. Die Porosität der Bauplatte 3 bestimmt sich insbesondere nach den Pulver- bzw. Partikeleigenschaften, d. h. insbesondere der Pulver- bzw. Partikelgröße, des verwendeten Baumaterials. Zweckmäßig wird die Porosität der Bauplatte 3 derart gewählt, dass nicht zu verfestigendes oder nicht verfestigtes Baumaterial durch die Bauplatte 3 in die in Fig. 4 unterhalb dieser angeordnete Auffang- oder Sammeleinrichtung 17 förderbar ist.

Im Rahmen des Verfahrens kann eine bewegbare oder eine nicht bewegbare Bauplatte 3 verwendet werden. Eine bewegbare Bauplatte 3 kann in wenigstens einem Bewegungsfreiheitsgrad, beispielsweise in einer vertikalen und/oder horizontalen Ebene, bewegt werden. Entsprechende Bewegungen der Bauplatte 3 können beispielsweise über eine Lagerung der Bauplatte 3 auf einem Kreuztisch (nicht gezeigt) realisiert werden. Nicht bewegbare, d. h. insbesondere nicht in einem horizontalen Bewegungsfreiheitsgrad, bewegbare Bauplatten 3 können sich insoweit positiv auf den generativen Bauvorgang auswirken, als diese ausschließlich als solider Untergrund für den generativen Bauvorgang dienen, wodurch sich herzustellende Objekte 2 mit besonders exakter Bauteilgeometrie herstellen lassen.

Um eine für den generativen Bauvorgang zweckmäßige Temperierung des Baumaterials zu ermöglichen, ist die verwendete Bauplatte 3 zumindest abschnittsweise mit einer Temperiereinrichtung 18 zum Temperieren der Bauplatte 3 ausgestattet (vgl. Fig. 4). Die Temperiereinrichtung 18 kann beispielsweise eine die Bauplatte 3 zumindest abschnittsweise, beispielsweise mäanderartig durchsetzende, von einem fluiden Temperiermedium, wie z. B. Wasser, durchströmbare Temperierkanalstruktur (nicht gezeigt) umfassen. Eine Temperiereinrichtung kann auch eine Anzahl elektrischer Heizelemente (nicht gezeigt), insbesondere elektrischer Widerstandsheizelemente, umfassen.

Vermittels der bereits im Zusammenhang mit der Vorrichtung 1 erwähnten Trenneinrichtung 10 kann das Begrenzungsbauteil 13 und das hergestellte Objekt 2 nach Beendigung des generativen Bauvorgangs von der Bauplatte 3, d. h. von der Oberfläche der Bauplatte 3, abgetrennt werden. Die verwendete Trenneinrichtung 10 kann hierfür relativ zu der Bauplatte 3 beweglich gelagert sein.

In den Fig. 5 - 9 sind weitere Ausführungsbeispiele zur Erläuterung des Verfahrens gezeigt; Bei den Fig. 5 - 8 handelt es sich jeweils um Aufsichten auf die Bauplatte 3, bei Fig. 9, ähnlich wie bei Fig. 4, um eine geschnittene bzw. seitliche Darstellung.

Anhand der Fig. 5 - 9 ist deutlich zu erkennen, dass entsprechende Begrenzungsbauteile 13 die Außen- oder Innenkontur des herzustellenden Objekts 2, insbesondere in Außen- oder Innenumfangsrichtung und/oder Höhenrichtung des herzustellenden Objekts 2 zumindest abschnittsweise abbilden. Anhand der Fig. 6, 8 und 9 ist nochmals ersichtlich, dass mehrere Begrenzungsbauteile 13 bzw. Begrenzungsbauteilabschnitte 13a - 13d ausgebildet werden können, welche jeweils einen bestimmten Bereich der Außen- oder Innenkontur des herzustellenden Objekts 2, insbesondere in Außen- oder Innenumfangsrichtung (vgl. Fig. 8) und/oder Höhenrichtung (vgl. Fig. 9) des herzustellenden Objekts 2, abbilden.

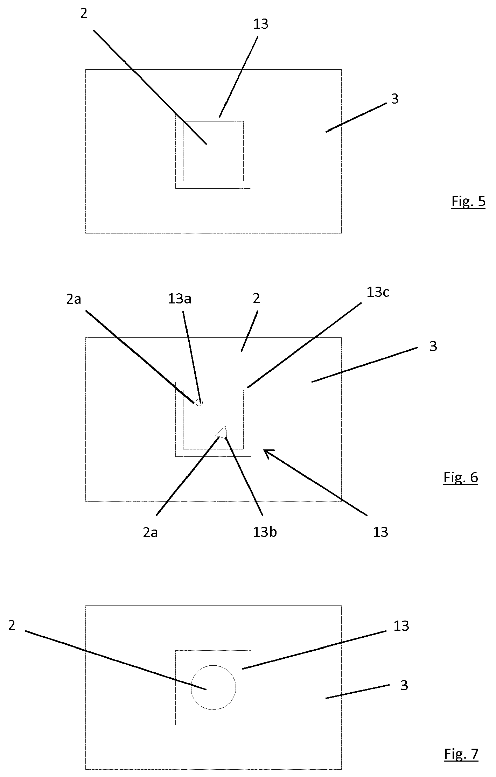

Für das in Fig. 7 gezeigte Beispiel eines herzustellenden Objekts 2 bzw. Objektabschnitts mit einer (kreis)runden bzw. rundlichen Querschnittsgeometrie bzw. -form wird ein Begrenzungsbauteil 13 mit einer hierzu entsprechenden (kreis)runden bzw. rundlichen Querschnittsgeometrie bzw. -form ausgebildet. Zu beachten ist, dass die Außenkontur des Begrenzungsbauteils 13 hier im Gegensatz zu dem in Fig. 3 gezeigten Beispiel von der die Außenkontur des herzustellenden Objekts 2 abbildenden Innenkontur abweicht.

Für die in den Fig. 5, 6, 8 gezeigten Beispiele herzustellender Objekte 2 bzw. Objektabschnitte mit einer ebenen oder eckigen Querschnittsgeometrie bzw. -form wird ein Begrenzungsbauteil 13 bzw. werden entsprechende Begrenzungsbauteilabschnitte 13a - 13d mit einer zu dem herzustellenden Objekt 2 entsprechenden ebenen oder eckigen Querschnittsgeometrie bzw. -form ausgebildet.

Im Hinblick auf den konstruktiven bzw. strukturellen Aufbau des herzustellenden Objekts 2 und die damit verbundene Ausbildung von Begrenzungsbauteilen 13, d. h. insbesondere den Aspekt, ob die Begrenzungsbauteile 13 (nur) die Außenkontur, (nur) die Innenkontur oder sowohl die Außen- als auch die Innenkontur des herzustellenden Objekts 2 abbilden, sind durch die Fig. 3 - 9 erläuternde Beispiele dargestellt.

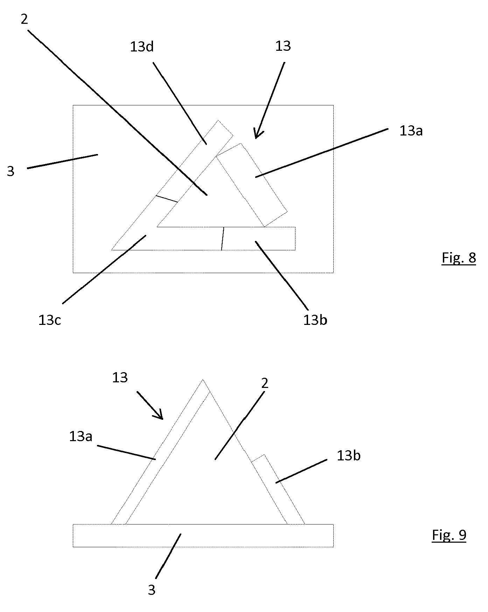

Bei einem massiven herzustellenden Objekt 2 (vgl. z. B. Fig. 5, 7 - 9) wird typischerweise wenigstens ein die Außenkontur des herzustellenden Objekts 2 zumindest abschnittsweise abbildendes Begrenzungsbauteil 13 ausgebildet. Bei einem wenigstens einen massiven Objektabschnitt aufweisenden herzustellenden Objekt 2 wird typischerweise zumindest im Bereich des wenigstens einen massiven Objektabschnitts ein die Außenkontur des herzustellenden Objekts 2 abbildendes Begrenzungsbauteil 13 ausgebildet. Das oder die Begrenzungsbauteil(e) 13 bildet bzw. bilden hier eine die Außenkontur des herzustellenden Objekts 2 konturgenau bzw. konturnah zumindest abschnittsweise, insbesondere vollständig, umgebende Begrenzungs- bzw. Umgrenzungswandung. Beispiele für massive Objekte 2 sind Klötze (vgl. Fig. 5), Quader (vgl. Fig. 5), Pyramiden (vgl. Fig. 9), Stangen (vgl. Fig. 7), Würfel (vgl. Fig. 5) oder dergleichen. Beispiele für massive Objektabschnitte sind entsprechend klotz-, quader-, stangen- oder würfelförmige Objektabschnitte.

Bei einem hohlen herzustellenden Objekt 2 (vgl. Fig. 3, 4) wird typischerweise wenigstens ein die Außenkontur und die Innenkontur des herzustellenden Objekts 2 zumindest abschnittsweise abbildendes Begrenzungsbauteil 13 ausgebildet. Bei einem wenigstens einen hohlen Objektabschnitt aufweisenden herzustellenden Objekt 2 (vgl. Fig. 6) wird typischerweise zumindest im Bereich des hohlen Objektabschnitts ein die Innenkontur des herzustellenden Objektabschnitts abbildendes Begrenzungsbauteil 13 bzw. Begrenzungsbauteilabschnitt 13a, 13b ausgebildet. Beispiele für hohle Objekte sind Hohlräume 2a aufweisende Klötze (vgl. Fig. 6), Quader (vgl. Fig. 6), Stangen (Hohlzylinder), Würfel oder dergleichen. Beispiele für hohle Objektabschnitte sind entsprechend klotz-, quader-, stangen- oder würfelförmige Hohlräume 2a bildende Objektabschnitte.

### BEZUGSZEICHENLISTE

- 1: Vorrichtung
- 2: Objekt
- 3: Bauplatte
- 3a-d: Begrenzungsbauteilabschnitt
- 4: Strahlungserzeugungseinrichtung
- 5: Dosiereinrichtung
- 6: Beschichtungseinrichtung
- 7: Absaug- und Spüleinrichtung

- 9: Trennelement
- 10: Trenneinrichtung
- 11: Kammer
- 12: Schleuse
- 13: Begrenzungsbauteil
- 14: Bauvolumen
- 15: Strömungskanäle
- 16: Strömungskanalstruktur
- 17: Sammeleinrichtung
- 18: Temperiereinrichtung

## Patentansprüche

1. Verfahren zum Herstellen eines dreidimensionalen Objekts (2) durch aufeinander folgendes Verfestigen von Schichten wenigstens eines mittels Strahlung verfestigbaren pulverartigen Baumaterials auf einer Bauplatte (3), **gekennzeichnet durch** folgende Verfahrensschritte:
- Ausbilden wenigstens eines die Außen- und/oder Innenkontur des herzustellenden dreidimensionalen Objekts (2) zumindest abschnittsweise abbildenden Begrenzungsbauteils (13) **durch** aufeinanderfolgendes Verfestigen von Schichten des oder wenigstens eines mittels Strahlung verfestigbaren pulverartigen Baumaterials zur Begrenzung eines die Außen- und/oder Innenkontur des herzustellenden dreidimensionalen Objekts (2) zumindest abschnittsweise abbildenden Bauvolumens (14),
- Ausbilden des herzustellenden dreidimensionalen Objekts (2) **durch** aufeinanderfolgendes Verfestigen von Schichten des oder wenigstens eines mittels Strahlung verfestigbaren pulverartigen Baumaterials innerhalb des **durch** das wenigstens eine Begrenzungsbauteil (13) begrenzten Bauvolumens (14).

2. Verfahren nach Anspruch 1, **dadurch gekennzeichnet, dass** vor dem Ausbilden des herzustellenden dreidimensionalen Objekts (2) und/oder zwischen einzelnen Verfestigungsschritten im Rahmen der Ausbildung des herzustellenden dreidimensionalen Objekts (2) ein wenigstens teilweises Befüllen des durch das wenigstens eine Begrenzungsbauteil (13) begrenzten Bauvolumens (14) mit wenigstens einem mittels Strahlung verfestigbaren pulverartigen Baumaterial zur Herstellung des dreidimensionalen Objekts (2) erfolgt.

3. Verfahren nach Anspruch 1 oder 2, **dadurch gekennzeichnet, dass** bei einem massiven herzustellenden dreidimensionalen Objekt (2) wenigstens ein die Außenkontur des herzustellenden dreidimensionalen Objekts zumindest abschnittsweise abbildendes Begrenzungsbauteil (13) ausgebildet wird oder, dass bei einem wenigstens einen massiven Objektabschnitt aufweisenden herzustellenden dreidimensionalen Objekt (2) zumindest im Bereich des wenigstens einen massiven Objektabschnitts ein die Außenkontur des herzustellenden dreidimensionalen Objekts (2) abbildendes Begrenzungsbauteil (13) ausgebildet wird.

4. Verfahren nach einem der vorhergehenden Ansprüche, **dadurch gekennzeichnet, dass** bei einem hohlen herzustellenden dreidimensionalen Objekt (2) wenigstens ein die Außenkontur und die Innenkontur des herzustellenden dreidimensionalen Objekts (2) zumindest abschnittsweise abbildendes Begrenzungsbauteil (13) ausgebildet wird, oder
dass bei einem wenigstens einen hohlen Objektabschnitt aufweisenden herzustellenden dreidimensionalen Objekt (2) zumindest im Bereich des hohlen Objektabschnitts ein die Innenkontur des hohlen Objektabschnitts abbildendes Begrenzungsbauteil (13) ausgebildet wird.

5. Verfahren nach einem der vorhergehenden Ansprüche, **dadurch gekennzeichnet, dass** das mittels Strahlung verfestigbare pulverartige Baumaterial nur auf die Bereiche der Bauplatte (3), in welchen das wenigstens eine Begrenzungsbauteil (13) und das herzustellende dreidimensionale Objekt (2) ausgebildet wird, aufgebracht wird.

6. Verfahren nach einem der vorhergehenden Ansprüche, **dadurch gekennzeichnet, dass** nicht zu verfestigendes oder nicht verfestigtes mittels Strahlung verfestigbares pulverartiges Baumaterial von der Bauplatte (3) vor und/oder während und/oder nach der Ausbildung des wenigstens einen Begrenzungsbauteils (13) und/oder des herzustellenden dreidimensionalen Objekts (2) entfernt wird.

7. Verfahren nach Anspruch 6, **dadurch gekennzeichnet, dass** nicht zu verfestigendes oder nicht verfestigtes mittels Strahlung verfestigbares pulverartiges Baumaterial von der Bauplatte (3) durch Abblasen mittels einer Gebläseströmung oder durch Absaugen mittels einer Saugströmung entfernt wird.

8. Verfahren nach Anspruch 6 oder 7, **dadurch gekennzeichnet, dass** in dem wenigstens einen oder in wenigstens einem Begrenzungsbauteil (13) wenigstens eine einen von einer Saug- und/oder Gebläseströmung durchströmbaren Strömungskanal (15) umfassende Strömungskanalstruktur (16) ausgebildet wird.

9. Verfahren nach einem der vorhergehenden Ansprüche, **dadurch gekennzeichnet, dass** eine zumindest abschnittsweise poröse Bauplatte (3) verwendet wird.

10. Verfahren nach Anspruch 9, **dadurch gekennzeichnet, dass** die Porosität der Bauplatte (3) derart gewählt wird, dass nicht verfestigtes mittels Strahlung verfestigbares pulverartiges Baumaterial durch die Bauplatte (3) in eine Sammeleinrichtung (17) förderbar ist.

11. Verfahren nach einem der vorhergehenden Ansprüche, **dadurch gekennzeichnet, dass** eine zumindest in einer vertikalen Richtung nicht bewegbar gelagerte Bauplatte (3) verwendet wird.

12. Verfahren nach einem der vorhergehenden Ansprüche, **dadurch gekennzeichnet, dass** eine zumindest in einer horizontalen Richtung, insbesondere in einer horizontalen Ebene, bewegbar gelagerte Bauplatte (3) verwendet wird.

13. Verfahren nach einem der vorhergehenden Ansprüche, **dadurch gekennzeichnet, dass** eine zumindest abschnittsweise mit einer Temperiereinrichtung (18) zum Temperieren der Bauplatte (3) ausgestattete Bauplatte (3) verwendet wird.

14. Verfahren nach einem der vorhergehenden Ansprüche, **dadurch gekennzeichnet, dass** innerhalb des ausgebildeten Bauvolumens (14) befindliches mittels Strahlung verfestigbares pulverartiges Baumaterial vor der Verfestigung und/oder zwischen einzelnen Verfestigungsschritten mittels einer Ebnungseinrichtung geebnet wird.

15. Verfahren nach einem der vorhergehenden Ansprüche, **dadurch gekennzeichnet, dass** das wenigstens eine Begrenzungsbauteil (13) und/oder das hergestellte dreidimensionale Objekt (2) mittels einer wenigstens ein Trennelement (9) aufweisenden, insbesondere bewegbar relativ zu der Bauplatte (3) gelagerten, Trenneinrichtung (10) von der Bauplatte (3) abgetrennt wird.
